(19) Europäisches Patentamt
European Patent Office
Office européen des brevets

(11) **EP 4 474 863 A1**

(12) **EUROPEAN PATENT APPLICATION**

(43) Date of publication:
**11.12.2024 Bulletin 2024/50**

(21) Application number: **23191245.2**

(22) Date of filing: **14.08.2023**

(51) International Patent Classification (IPC):
**G01S 13/00** (2006.01)    **G06F 30/20** (2020.01)
**G06F 30/15** (2020.01)    **G06F 30/30** (2020.01)
**G01S 13/931** (2020.01)    **G01S 13/46** (2006.01)

(52) Cooperative Patent Classification (CPC):
**G01S 13/006; G06F 30/15; G06F 30/20;**
G01S 13/931; G01S 2013/462; G01S 2013/93271;
G06F 2119/02

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **07.06.2023 US 202318331105**

(71) Applicant: **Aptiv Technologies AG**
**8200 Schaffhausen (CH)**

(72) Inventors:
• **Chen, Fang**
**Oak Park, CA, 91377 (US)**

• **Cai, Xiuzhang**
**Carmel, IN, 46074 (US)**
• **Camps Raga, Bruno F.**
**Mt. Juliet, TN, 37122 (US)**
• **Simons, Maryam**
**42119 Wuppertal (DE)**
• **Ioffe, Alexander**
**52339 Bonn (DE)**

(74) Representative: **Manitz Finsterwald**
**Patent- und Rechtsanwaltspartnerschaft mbB**
**Martin-Greif-Strasse 1**
**80336 München (DE)**

(54) **ELECTROMAGNETIC RESPONSE SIMULATION FOR ARBITRARY ROAD SURFACE PROFILES**

(57) This document describes techniques and systems for electromagnetic response simulation for arbitrary road surface profiles. An electromagnetic response simulator receives a position and an orientation of both an electromagnetic sensor (e.g., radar sensor) and a target, and a geometric profile of a road surface. The road surface may vary in elevation in the lateral and/or longitudinal directions. The electromagnetic response simulator estimates reflection points of electromagnetic rays along the geometric profile of the road surface and translates the positions and the orientations of the electromagnetic sensor and the target into respective local coordinates corresponding to each reflection point. The electromagnetic responses can then be calculated, corresponding simulated rays can be output to a sensor simulator. In this manner, the variance in elevation of a road surface can be included in generating simulated rays, and the electromagnetic response simulator may more accurately simulate real-world electromagnetic responses.

*FIG. 1-1*

**Description**

**BACKGROUND**

Radars are useful devices that can detect and track objects. Accordingly, radar provides many advantages for autonomous-driving applications or driver-assistance applications. During engineering and development, a radar simulation may be run to evaluate performance of the radar in various conditions. These simulations may benefit from incorporating an electromagnetic response model that simulates an electromagnetic response associated with the radar in a simulated environment. However, existing electromagnetic response models may be too complex or too slow to be used in some computer simulation environments; if used at all, some may fail to accurately simulate real-world electromagnetic responses.

**SUMMARY**

Aspects described below include accurate and efficient electromagnetic response for a sensor simulator. In one example, a method includes receiving, by an electromagnetic response simulator, a position and an orientation of an electromagnetic sensor and a target. The method further includes receiving, by the electromagnetic response simulator, a geometric profile of a road surface. The method further includes estimating, by the electromagnetic response simulator, reflection points of electromagnetic rays along the geometric profile of the road surface using an optimization algorithm. The method further includes translating, by the electromagnetic response simulator, the position and orientation of the electromagnetic sensor and the target to a local coordinate system of each estimated reflection point. The method further includes computing, by the electromagnetic response simulator, electromagnetic responses based on the positions of the electromagnetic sensor and the target in the respective local coordinate system of each estimated reflection point. The method further includes collecting, by the electromagnetic response simulator, simulated rays corresponding to the electromagnetic responses. The method further includes outputting, by the electromagnetic response simulator, the simulated rays to an electromagnetic sensor simulator for simulating an electromagnetic sensor system.

These and other described techniques may be performed by hardware or a combination of hardware and software executing thereon. For example, a computer-readable storage media (CRM) may have instructions stored thereon and that when executed configure a processor to perform the described techniques. A system may include means for performing the described techniques. A processor or processor unit may be part of a system that is configured to execute the methods and techniques described herein.

This Summary introduces simplified concepts related to electromagnetic response simulation for arbitrary road surface profiles, further described in the Detailed Description and Drawings. This Summary is not intended to identify essential features of the claimed subject matter, nor is it intended for use in determining the scope of the claimed subject matter.

**BRIEF DESCRIPTION OF THE DRAWINGS**

The details of electromagnetic response simulation for arbitrary road surface profiles are described in this document with reference to the Drawings that may use same numbers to reference like features and components, and hyphenated numbers to designate variations of these like features and components. The Drawings are organized as follows:

FIGs. 1-1 and 1-2 illustrate an example environment and an example simulated environment, respectively, in which electromagnetic response simulation for arbitrary road surface profiles may be applied, in accordance with techniques of this disclosure;
FIG. 2 illustrates an example flow diagram of data for the electromagnetic simulator related to electromagnetic response simulation for arbitrary road surface profiles, in accordance with techniques of this disclosure;
FIG. 3 illustrates a non-flat road scenario in which electromagnetic response simulation for arbitrary road surface profiles is applicable, in accordance with techniques of this disclosure;
FIGs. 4-1 to 4-3 illustrate an example optimization algorithm utilized for electromagnetic response simulation for arbitrary road surface profiles is applicable, in accordance with techniques of this disclosure; and
FIG. 5 illustrates an example method for electromagnetic response simulation for arbitrary road surface profiles, in accordance with techniques of this disclosure.

**DETAILED DESCRIPTION**

OVERVIEW

An automotive radar environment simulation tool uses a computer to simulate wave propagation and scattering phenomenon of millimeter wave (MMW) radar signals in a traffic scene, as well as simulate the propagation of such signals through the radar hardware and processing by the software backend. Compared to a road test, radar environment simulation is much less expensive, and easier to repeat for some critical scenarios. Likewise, it can provide a deep insight into the interaction between the environment and the radar signals, and therefore, it can benefit and accelerate radar development. The propagation and scattering aspect of this simulation makes use of electromagnetic response simulation.

An accurate representation of vertical multipaths due to road reflections of the electromagnetic signals (e.g., radar signals) can be crucial to accurately estimate elevation measurements, but many current tools fail to adequately address such effects. Generally, these tools may try to solve this problem by modeling a road as a stationary target. However, this solution may require too many rays to be launched to cover the entire road, which can result in high computational costs while still not guaranteeing accurate results.

One method to overcome these shortcomings is to use a shooting and bouncing rays method based on image theory to solve the vertical multipath problem due to road reflections. The image theory assumes a flat road (e.g., the surface height of the road is considered to be constant). However, the geometrical profile of a road may not always be flat, which can cause a discrepancy between sensor measurements and simulated data, especially for a sensor having vertical discrimination ability.

This document describes techniques and systems for electromagnetic response simulation for arbitrary road surface profiles. An electromagnetic response simulator receives a position and an orientation of both an electromagnetic sensor (e.g., radar sensor) and a target and a geometric profile of a road surface. The road surface may vary in elevation in the lateral and/or longitudinal directions. The electromagnetic response simulator estimates reflection points of electromagnetic rays along the geometric profile of the road surface and translates the positions and the orientations of the electromagnetic sensor and the target into respective local coordinates corresponding to each reflection point. The electromagnetic responses can then be calculated, corresponding simulated rays can be output to a sensor simulator. In this manner, the variance in elevation of a road surface can be included in generating simulated rays, and the electromagnetic response simulator may more accurately simulate real-world electromagnetic responses.

EXAMPLE ENVIRONMENT

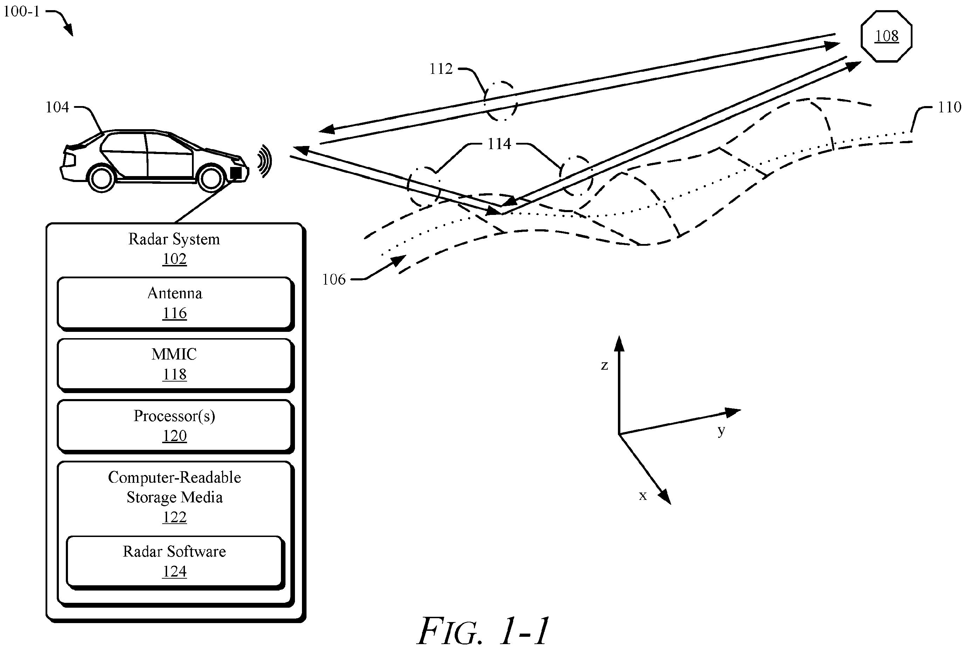

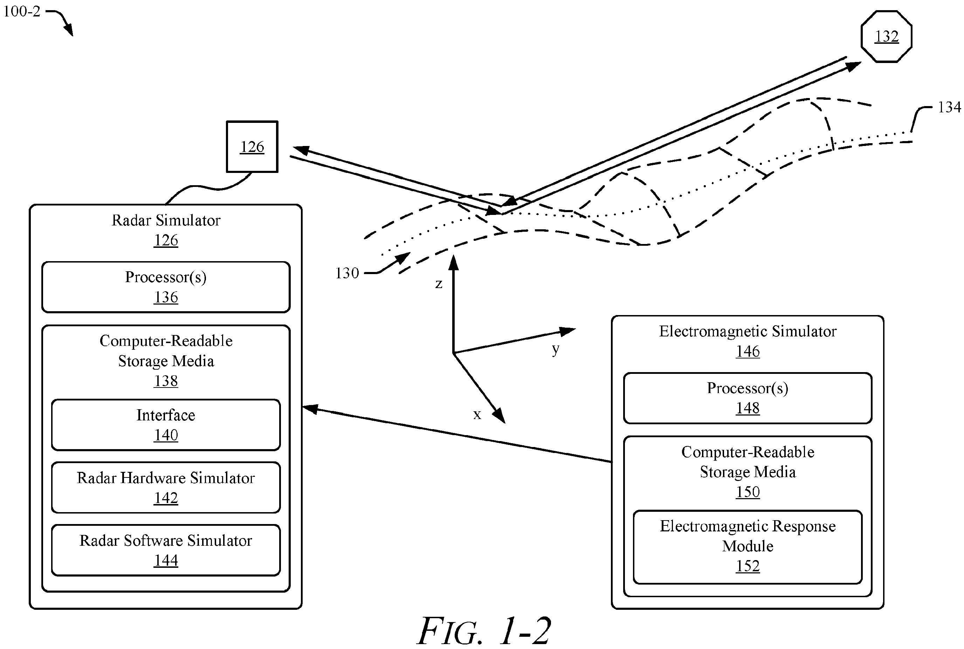

FIGs. 1-1 and 1-2 illustrate an example environment 100-1 and an example simulated environment 100-2, respectively, in which electromagnetic response simulation for arbitrary road surface profiles may be applied, in accordance with techniques of this disclosure. In the depicted environment 100-1 in FIG. 1-1, a radar system 102 is mounted to, or integrated within, a vehicle 104 traveling a road 106 towards a target 108. The road 106 may have an arbitrary geometric profile. That is, the road may vary in height (e.g., z direction) along its surface in a lateral direction (e.g., x direction) and/or in a longitudinal direction (e.g., y direction). The vehicle may travel the road 106 following a route 110.

The radar system 102 is capable of detecting one or more targets 108 that are proximate to the vehicle 104 and associated with a signal-to-noise ratio that is greater than a detection threshold of the radar system 102. Although illustrated as car, the vehicle 104 can represent other types of motorized vehicles (e.g., a motorcycle, a bus, a tractor, a semi-trailer truck, or construction equipment), types of non-motorized vehicles (e.g., a bicycle), types of railed vehicles (e.g., a train or a trolley car), watercraft (e.g., a boat or a ship), aircraft (e.g., an airplane or a helicopter), or spacecraft (e.g., satellite). In general, the radar system 102 can be mounted to any type of moving platform, including moving machinery or robotic equipment.

In the depicted implementation, the radar system 102 is mounted to a front side of the vehicle 104. In other implementations, the radar system 102 can be mounted to an underside, a top side, a backside, a left side, or a right side of the vehicle 104. In some cases, the vehicle 104 includes multiple radar systems 102, such as a first rear-mounted radar system 102 positioned near a left side of the vehicle 104 and a second rear-mounted radar system 102 positioned near a right side of the vehicle 104. In general, locations of the one or more radar systems 102 can be designed to provide a particular field of view that encompasses a region of interest in which the target 108 may be present. Example fields of view include a 360-degree field of view, one or more 180-degree fields of view, one or more 90-degree fields of view, and so forth, which can overlap (e.g., four 120-degree fields of view).

The target 108 is composed of one or more types of material that reflect radar signals. Depending on the application, the target 108 can represent a target of interest or clutter. In some cases, the target 108 is a moving target, such as another vehicle, a human, or an animal. In other cases, the target 108 is a stationary target, such as a continuous or discontinuous road barrier (e.g., a traffic cone, a concrete barrier, a guard rail, or a fence), a tree, or a parked vehicle.

The vehicle 104 can implement one or more automotive systems, which utilize data provided by the radar system 102. Example types of automotive systems include a driver-assistance system or an autonomous-driving system. Using the data provided by the radar system 102, the driver-assistance system can monitor one or more blind spots of the vehicle 104 and alert a driver to a potential collision with the target 108. The autonomous-driving system can move the vehicle 104 to a location while analyzing data provided by the radar system 102 to avoid collisions with other targets 108, perform emergency braking, change lanes, or adjust the speed of the vehicle 104.

To detect the target 108, the radar system 102 transmits signals and receives reflected signals along a direct path 112 and along one or more multipaths 114 as the vehicle 104 travels the route 110. The radar system 102 transmits and receives these signals with at least one antenna 116 (e.g., a multiple-input multiple-output (MIMO) antenna). The radar system 102 includes at least one monolithic microwave integrated circuit (MMIC) 118. The MMIC 118 includes circuitry and logic for transmitting and receiving the radar signals via the antenna 116. The radar system 102 can also include one or more processors 120 and computer-readable storage media (CRM) 122. The CRM 122 includes radar software 124 for analyzing the radar receive signals, detecting the target 108, and determining one or more characteristics (e.g., position or velocity) of the target 108.

The depicted simulated environment 100-2 in FIG. 1-2 simulates the depicted environment 100-1 in FIG. 1-1. A radar simulator 126 simulates the radar system 102 traveling a road model 130 that can be modeled after the road 106, the road model 130 having the same geometrical profile as the road 106. The radar simulator 126, similar to the radar system 102, travels a route 134 down the road 130 towards the target 132 during the simulation.

The radar simulator 126 models hardware and/or software of the radar system 102 to enable performance of the radar system 102 to be evaluated for a given simulated environment. Throughout a development cycle of the radar system 102, the radar simulator 126 can be used to evaluate different system designs (e.g., different hardware configurations or different operational modes), test different versions of the radar software 124, or verify requirements, for instance. Use of the radar simulator 126 enables design or implementation problems within the radar system 102 to be quickly discovered during design, integration, and testing phases prior to performing a live test.

The radar simulator 126 performs operations to simulate the hardware of the radar system (e.g., parts of the antenna 116 and/or MMIC 118), the radar software 124 executed by the processor 120, or a combination thereof. The radar simulator 126 can also account for non-ideal characteristics of the radar system 102 or the environment 100-1, such as noise or non-linearities. In particular, the radar simulator 126 can model phase noise, waveform non-linearities, and uncorrelated noise within the MMIC 118. With these capabilities, the radar simulator 126 can have a similar noise floor and dynamic range as the radar system 102.

The radar simulator 126 includes at least one processor 136 and CRM 138. The CRM 138 can be implemented by one or more memory devices that enable persistent and/or non-transitory data storage. In some cases, the processor 136 and the CRM 138 are packaged together within an integrated circuit or on a printed circuit board. In other cases, the processor 136 and the CRM 138 can be implemented separately and operationally coupled together such that the processor 136 can access instructions stored by the CRM 138.

The CRM 138 includes at least one interface module 140 and at least one radar hardware simulator 142. Optionally, the CRM 138 can also include at least one radar software simulator 144. The interface module 140, the radar hardware simulator 142, and the radar software simulator 144 can be implemented using hardware, software, firmware, or a combination thereof. In this example, the processor 136 implements the interface module 140, the radar hardware simulator 142, and the radar software simulator 144.

The interface module 140 enables the radar simulator 126 to process environmental response data provided by an electromagnetic simulator 146. Generally, the interface module 140 transforms the environmental response data into a form that is usable by the radar hardware simulator 142. In some cases, the interface module 140 adjusts the environmental response data to account for an antenna response of the antenna 116.

The radar hardware simulator 142 models the MMIC 118. In particular, the radar hardware simulator 142 performs operations that simulate waveform generation, modulation, demodulation, multiplexing, amplification, frequency conversion, filtering, and/or analog-to-digital conversion operations performed by the MMIC 118. In other words, the radar hardware simulator 142 performs operations of the MMIC 118, which occur between the processor 120 and the antenna 116. The radar hardware simulator 142 can account for the dynamic range of the radar system 102, as well as the presence of non-linear effects and noise. The radar hardware simulator 142 can be used to verify different hardware configurations and operational modes of the radar system 102.

The radar software simulator 144 models the radar software 124 of the radar system 102. In particular, the radar software simulator 144 performs digital baseband processing operations that simulate operations performed by the processor 120. These operations can include Fourier transforms (e.g., Fast Fourier transform), noise floor estimation, clutter map generation, constant-false alarm rate thresholding, object detection, and object position estimation (e.g., digital beamforming). In some cases, the radar software simulator 144 includes a version of the radar software 124. In this way, the radar simulator 126 can be used to verify software requirements and evaluate different software versions of the radar system 102.

During operation, the radar simulator 126 accepts electromagnetic response data from the electromagnetic simulator 146 and generates a radar report. The radar report can be used to evaluate performance of the radar system 102 for a given simulated environment. By providing accurate electromagnetic response data, the electromagnetic simulator 146 may enable the performance of the radar system 102 to be reliably evaluated.

The electromagnetic simulator 146 includes at least one processor 148 and CRM 150. The CRM 150 can be implemented by one or more memory devices that enable persistent and/or non-transitory data storage. In some cases, the processor 148 and the CRM 150 are packaged together within an integrated circuit or on a printed circuit board. In other cases, the processor 148 and the CRM 150 can be implemented separately and operationally coupled together such that the processor 148 can access instructions stored by the CRM 150.

The CRM 150 includes an electromagnetic response module 152. The electromagnetic response module 152 can include instructions, that when executed, cause the processor 148 to perform instructions to generate electromagnetic responses in the simulated environment 100-2. In particular, the electromagnetic response module 152 may include instructions that cause the processor 148 to adaptively launch rays, trace rays, including the reflection of rays from the target 132, and calculate the electromagnetic response of each of the traced rays.

EXAMPLE SYSTEMS

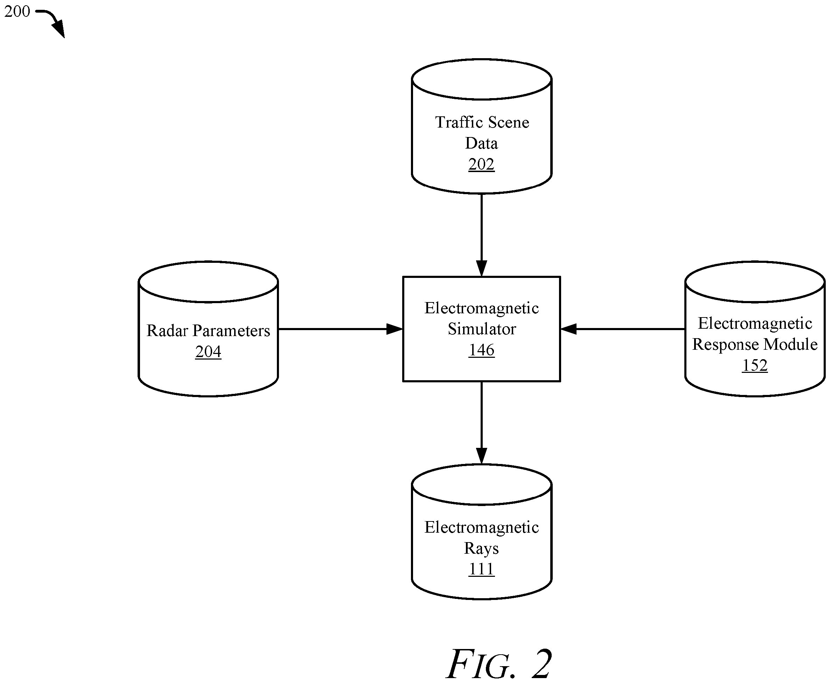

FIG. 2 illustrates an example flow diagram 200 of data for the electromagnetic simulator 146 related to electromagnetic response simulation for arbitrary road surface profiles, in accordance with techniques of this disclosure. The electromagnetic simulator 146 (e.g., a simulation model) evaluates the propagation and scattering effects of a simulated electromagnetic signal, such as a radio-frequency signal. In general, the electromagnetic simulator 146 evaluates one or more propagation paths that originate from a reference point and return to the reference point within the simulated environment 100-2. Example types of propagation paths can include a direct line-of-sight path (e.g., the direct path 112) or an indirect path associated with multipath propagation (e.g., the multipath 114).

During operation, the electromagnetic simulator 146 determines characteristics of the different propagation paths within the simulated environment 100-2. As an input, the electromagnetic simulator 146 accepts traffic scene data 202, including the road profile (e.g., the geometric profile of the road surface) for the road 130, and the positions and the orientations of both the electromagnetic sensor (e.g., the radar simulator 126, particularly the location of the antenna being simulated) and the target 132. The road profile may include height variations in both lateral and longitudinal directions. As another input, the electromagnetic simulator 146 receives the radar parameters 204. These parameters may include the operating frequency and the field-of-view of the simulated sensor and other parameters.

The geometric profile of the road surface may be based on a real-world road profile that was measured by a sensor such as a global navigation satellite system sensor or an inertial measurement unit sensor. The real-world measurements can be used to validate the accuracy of the simulated rays generated by the electromagnetic simulator 146.

The electromagnetic response module 152 accepts the traffic scene data 202 and the radar parameters 204. Reflection points of electromagnetic energy are estimated for the surface of the road 130 using an optimization algorithm such as the maximum likelihood method. Due to the road 130 possibly having elevation variances, the positions and the orientations of the electromagnetic sensor and the target 132 are translated from a global coordinate system to a local coordinate system relative to the respective reflection point. In the respective local coordinate system, the electromagnetic response module 152 utilizes an shooting and bouncing rays (SBR) simulation tool to compute the radar response. In some cases, this is a modified SBR approach that uses image theory to calculate multipath responses more accurately. The electromagnetic response module 152 generates simulated electromagnetic rays 206 based on the calculated electromagnetic responses and the duplicate simulated rays 206 are removed. The remaining simulated rays 206 can be output to an electromagnetic sensor simulator (e.g., the radar simulator 126). In this manner, measured values of a radar system can be simulated more accurately by a radar simulator without increasing the computational resources required to generate the simulation.

EXAMPLE IMPLEMENTATIONS

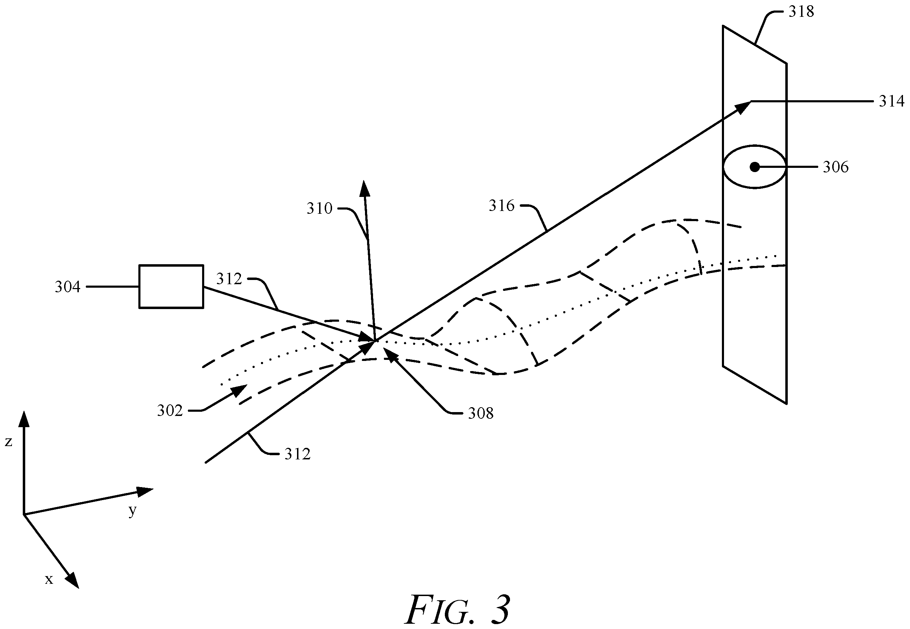

FIG. 3 illustrates a non-flat road scenario in which electromagnetic response simulation for arbitrary road surface profiles is applicable, in accordance with techniques of this disclosure. A road in this simulation model has a geometric profile with elevation variances (e.g., the z direction) both laterally (e.g., the x direction) and longitudinally (e.g., the y direction) with respect to a radar sensor 304. The geometry of the road surface can be demonstrated as a height function with x and y in the global coordinate: $s(x, y)$. The positions and the orientations of the radar sensor 304 and a target 306 can, likewise, be described with respect to the global coordinate system. The position of the radar sensor 304 is denoted as $\vec{P}_0$ , and the reference position of the target 306 is denoted as $\vec{P}$ . The potential ray reflection position 308, denoted

as $\vec{S}$ , can be estimated on the road 302. Because the road profile can be arbitrary, there is no analytic solution to find the reflection position 308 directly. The searching problem can be converted into an optimization problem. For any given point on the road surface $\vec{S}_i = [S_{ix}, S_{iy}, S_{iz}]\ S_{iz} = s(S_{ix}, S_{iy}))$ . A normal vector 310 ($\hat{N}$) can be computed from its adjacent positions. The image position of the radar sensor 304, based on image theory, is given by:

$$\vec{P}_0{'} = \vec{P}_0 + 2[(\vec{S}_i - \vec{P}_0) \cdot \hat{N}]\hat{N} = [P'_{0x}, P'_{0y}, P'_{0z}] \tag{1}$$

Using geometric optics, a ray 312 can be traced from $\vec{P}_0$ to $\vec{S}_i$ . An intersection point 314, denoted as $\vec{P}' = [P'_x, P'_y, P'_z]$ , of a reflected ray 316 can be found on the x-z plane 318 that contains $\vec{P} = [P_x, P_y, P_z]$ , where $P'_y = P_y$ . The other two coordinates of the intersection point 314 can be given by:

$$P'_x = S_{ix} + \frac{(P_y - S_{iy})(S_{ix} - P'_{0x})}{S_{iy} - P'_{0y}} \tag{2}$$

$$P'_z = S_{iz} + \frac{(P_y - S_{iy})(S_{iz} - P'_{0z})}{S_{iy} - P'_{0y}} \tag{3}$$

If the point $\vec{S}_i$ is the reflection point on the road, equation 4 should be satisfied:

$$F = |\vec{P} - \vec{P'}| = 0 \tag{4}$$

$F$ is the cost function, and the goal of the optimization problem is to search the x-y plane to minimize $F$:

$$\arg\min_{(x,y)} F(x, y) \tag{5}$$

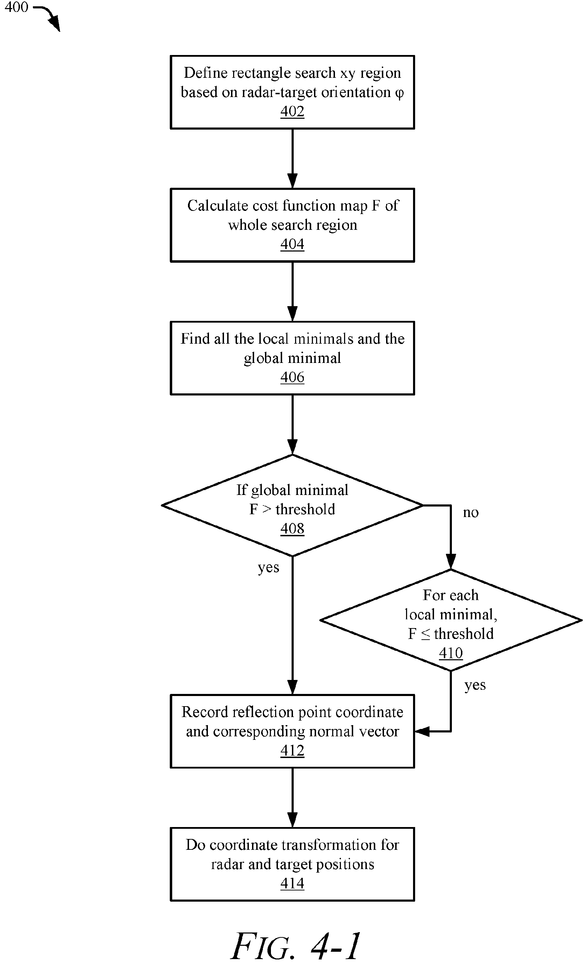

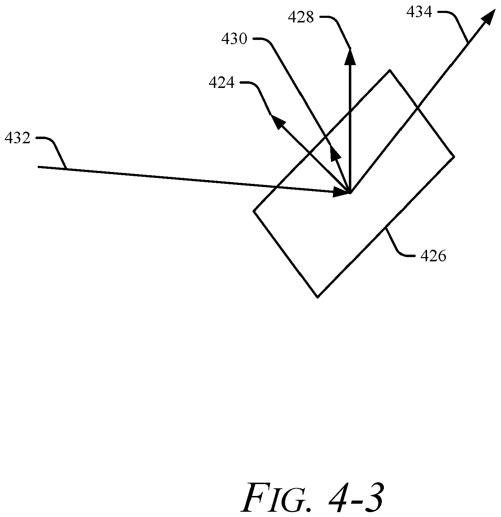

The reflection position 308, $\vec{S}$ , can then be found using an optimization algorithm such as described with respect to FIGs. 4-1 to 4-3.

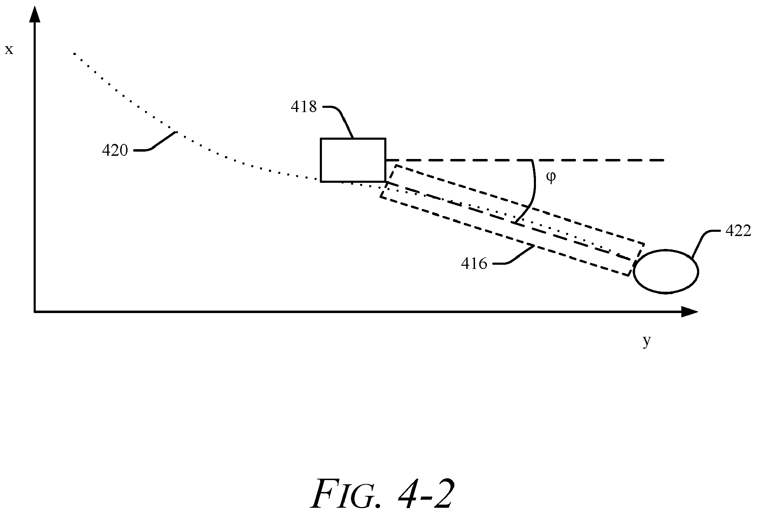

FIGs. 4-1 to 4-3 illustrate an example optimization algorithm 400 utilized for electromagnetic response simulation for arbitrary road surface profiles is applicable, in accordance with techniques of this disclosure. At step 402, as illustrated in FIG. 4-2, a rectangle search x-y region 416 is defined based on the orientation, φ, of a radar 418 traveling a route 420 to a target 422. A smaller rectangle search x-y region may be defined to lower computation time.

At 404, a cost function map of the whole search region is calculated based on equation 4. The cost function map relates an intersection point (e.g., the intersection point 314) to the position of the target 422 (e.g., the position, $\vec{P}$ , of target 306).

At 406, all the local minimals and the global minimal in the search x-y region 416 are determined within the search region 416 based on equation 5, and at 408, the global minimal is compared to a threshold. The threshold may have a small value such as one centimeter or two centimeters. If the global minimal is greater than the threshold, at 412 the coordinates and corresponding normal vector 424, $\hat{N}$, of a reflection point 426 (e.g., a single valid reflection point), as illustrated in FIG. 4-3, related to the global minimal is recorded. If the global minimal is less than or equal to the threshold, the coordinates and corresponding normal vector 424, $\hat{N}$, of the reflection point 426 related to each local minimal that is less than or equal to the threshold is recorded.

At 414, the position and orientation of the radar 418 and the target 422 are transformed into a respective local coordinate system of the recorded reflection points 426. This transformation is described in more detail with respect to FIG. 4-3.

As illustrated in FIG. 4-3, the original z direction is the global vector 428, $\hat{z}$, of each respective reflection point 426. The new z direction, in each local coordinate system related to the respective reflection point 426 is along the respective normal vector 424, $\hat{N}$, and the new x direction is along a tangential vector 430, $\hat{t}$. The tangential vector 430, $\hat{t}$, is derived from:

$$\hat{t} = \frac{\hat{N} \times \hat{z}}{|\hat{N} \times \hat{z}|} = [t_1, t_2, t_3] \tag{6}$$

The angle between the normal vector 424, $\hat{N}$, and the global vector 428, $\hat{z}$, is denoted as $\theta$, and $\cos\theta = \hat{N} \cdot \hat{z}$. The rotation matrix that transforms the global coordinates 432 and 434 related to the radar 418 and the target 422, respectively is given by:

$$R(\hat{t}, \theta) \tag{7}$$
$$= \begin{bmatrix} \cos\theta + t_1^2(1 - \cos\theta) & t_1 t_2(1 - \cos\theta) - t_3\sin\theta & t_1 t_3(1 - \cos\theta) + t_2\sin\theta \\ t_1 t_2(1 - \cos\theta) + t_3\sin\theta & \cos\theta + t_2^2(1 - \cos\theta) & t_2 t_3(1 - \cos\theta) - t_1\sin\theta \\ t_1 t_3(1 - \cos\theta) - t_2\sin\theta & t_2 t_3(1 - \cos\theta) + t_1\sin\theta & \cos\theta + t_3^2(1 - \cos\theta) \end{bmatrix}$$

Then for example, the position and orientation of the target in the local coordinate system can be given by:

$$\vec{P}_{new} = R(\vec{P}_{global} - \vec{S}_{global}) \tag{8}$$

$$\vec{D}_{new} = R\vec{D}_{global} \tag{9}$$

This data can be fed into the image theory based SBR method to compute the simulated rays. For one target, there may need to be thousands to millions of rays in the SBR simulation, but this optimization process only needs to be performed once since we can assume the road surface is locally flat, thus, the computational burden may not be increased too much, and the data processing may be the same as the traditional methods that do not include the capability of estimating reflection points on a road surface having elevation variations.. By adding this capability, the simulated electromagnetic responses produced by the techniques described in the document may be closer to electromagnetic responses measured in a real-world environment with little or no sacrifice of processing speeds.

EXAMPLE METHODS

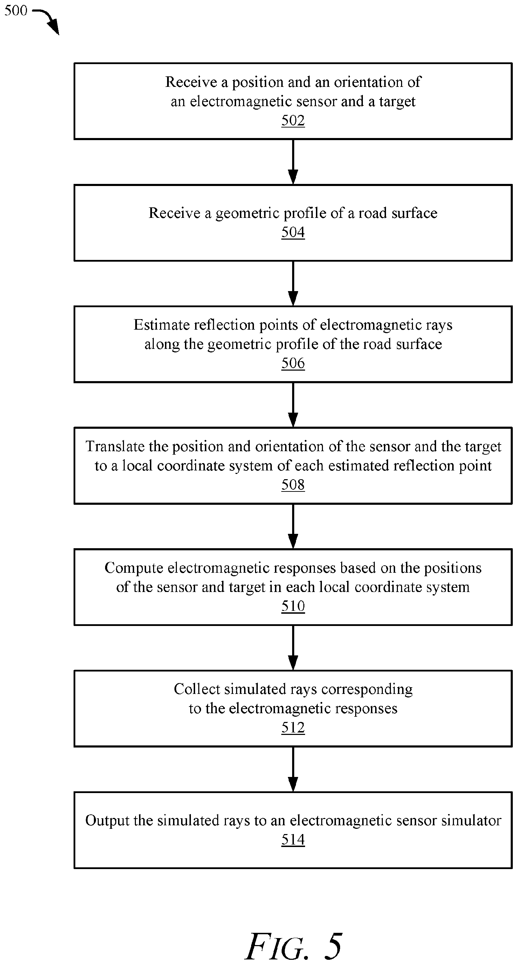

FIG. 5 illustrates an example method 500 for electromagnetic response simulation for arbitrary road surface profiles, in accordance with techniques of this disclosure. Method 500 is shown as sets of operations (or acts) performed, but not necessarily limited to the order or combinations in which the operations are shown herein. Further, any of one or more of the operations may be repeated, combined, or reorganized to provide other methods.

At 502, an electromagnetic response simulator receives a position and an orientation of an electromagnetic sensor and a target. The orientation of the radar and the target may be with respect to each other. The positions and the orientations may be provided in a global coordinate system of the simulated environment.

At 504, the electromagnetic response simulator receives a geometric profile of a road surface (e.g., a road profile). The geometric profile may vary in elevation both laterally and longitudinally. That is, the elevation in a z direction may vary across an x-y plane.

At 506, the electromagnetic response simulator estimates reflection points of electromagnetic rays along the geometric profile of the road surface. The simulator may accomplish this by defining a rectangular search region (e.g., in the x-y plane) based on the position and the orientation of the electromagnetic sensor and the target. A cost function for the search region can then be calculated. Based on the cost function, all local minimals of the cost function and a global minimal of the cost function are found. Based on a comparison of the global minimal to a threshold value, a valid reflection point corresponding to the global minimal or corresponding to each local minimal is determined. If the global minimal is greater than the threshold (e.g., one centimeter, two centimeters), the coordinates and the normal vector related to the global minimal are recorded. If the global minimal is less than or equal to the threshold, the coordinates and the normal vectors of each valid reflection point of each local minimum that is less than or equal to the threshold.

At 508, the electromagnetic response simulator translates the position and orientation of the electromagnetic sensor and the target into a local coordinate system of each estimated reflection point. Each local coordinate system is based on rotating the plane of the estimated reflection point such that the global z direction lines up with the normal vector of the estimated reflection point. Then using a rotation matrix, the positions and orientations of the sensor and the target can be transformed to the local coordinate system.

At 510, the electromagnetic response simulator computes electromagnetic responses based on the positions of the sensor and the target in each respective local coordinate system. The simulator may use an image theory based SBR method to make the computations.

At 512, the electromagnetic response simulator collects the simulated rays corresponding to the computed electromagnetic responses. Any duplicate rays may be discarded.

At 514, the electromagnetic response simulator outputs the simulated rays to an electromagnetic sensor simulator such as a radar simulator. In this manner, the simulated rays may compare more closely to measured rays in a real-world environment than simulated rays generated by a simulator that does not take elevation variances of a road surface into account. Further, the techniques described herein may not increase computational complexity required to produce the ray resulting in no significant increase in processing times.

ADDITIONAL EXAMPLES

Some additional examples for electromagnetic response simulation for arbitrary road surface profiles are provided below.

Example 1: A method comprising: receiving, by an electromagnetic response simulator, a position and an orientation of an electromagnetic sensor and a target; receiving, by the electromagnetic response simulator, a geometric profile of a road surface; estimating, by the electromagnetic response simulator, reflection points of electromagnetic rays along the geometric profile of the road surface using an optimization algorithm; translating, by the electromagnetic response simulator, the position and orientation of the electromagnetic sensor and the target to a local coordinate system of each estimated reflection point; computing, by the electromagnetic response simulator, electromagnetic responses, based on the positions of the electromagnetic sensor and the target in the respective local coordinate system of each estimated reflection point; collecting, by the electromagnetic response simulator, simulated rays corresponding to the electromagnetic responses; and outputting, by the electromagnetic response simulator, the simulated rays to an electromagnetic sensor simulator for simulating an electromagnetic sensor system.

Example 2: The method of example 1, wherein the geometric profile of the road surface includes a variation in elevation of the road surface.

Example 3: The method of any one of the preceding examples, wherein the geometric profile of the road surface includes a variation in elevation of the road surface.

Example 4: The method of any one of the preceding examples, wherein the variation in elevation of the road surface is in a longitudinal direction with respect to the position and the orientation of the electromagnetic sensor and the target.

Example 5: The method of any one of the preceding examples, wherein the geometric profile of the road surface is based on sensor measurements of a road surface used to validate an accuracy of the simulated rays.

Example 6: The method of any one of the preceding examples, wherein the sensor measurements comprise: measurements based on a global navigation satellite system sensor; or measurements based on an inertial measurement unit sensor.

Example 7: The method of any one of the preceding examples, wherein estimating reflection points along the geometric profile of the road model using the optimization algorithm comprises: defining a rectangular search region based on the position and the orientation of the electromagnetic sensor and the target; calculating a cost function for the search region; finding all local minimals of the cost function and a global minimal of the cost function; determining, based on a comparison of the global minimal to a threshold value, a valid reflection point corresponding to the global minimal or corresponding to each local minimal; and recording the coordinates and the normal vectors of each valid reflection point.

Example 8: The method of any one of the preceding examples, wherein determining, based on a comparison of the global minimal to a threshold value, a valid reflection point corresponding to the global minimal or corresponding to each local minimal comprises: determining, based on the global minimal being greater than the threshold value, that a single valid reflection point corresponds to the global minimal; or determining, based on the global minimal being less than or equal to the threshold value, that a valid reflection point corresponds to each local minimal.

Example 9: The method of any one of the preceding examples, wherein estimating reflection points along the geometric profile of the road model using the optimization algorithm is performed once for a respective target.

Example 10: The method of any one of the preceding examples, wherein computing electromagnetic responses comprises: using a shooting and bouncing rays method to compute the electromagnetic responses.

Example 11: The method of any one of the preceding examples, wherein the shooting band bouncing rays method is further based on image theory.

Example 12: The method of any one of the preceding examples, wherein collecting the simulated rays corresponding to the electromagnetic responses further comprises: removing duplicate simulated rays.

Example 13: The method of any one of the preceding examples, wherein: the electromagnetic sensor simulator comprises a radar simulator; and the electromagnetic sensor system comprises a radar system.

Example 14: A system comprising: at least one processor configured to: receive a position and an orientation of an electromagnetic sensor and a target; receive a geometric profile of a road surface; estimate reflection points of electromagnetic rays along the geometric profile of the road surface using an optimization algorithm; translate the position and orientation of the electromagnetic sensor and the target to a local coordinate system of each estimated reflection point; compute electromagnetic responses, based on the positions of the electromagnetic sensor and the target in the respective local coordinate system of each estimated reflection point; collect simulated rays corresponding to the electromagnetic responses; and output the simulated rays to an electromagnetic sensor simulator for simulating an electromagnetic sensor system.

Example 15: The system of any one of the preceding examples, wherein the geometric profile of the road surface includes a variation in elevation of the road surface.

Example 16: The system of any one of the preceding examples, wherein the variation in elevation of the road surface is in a lateral direction with respect to the position and the orientation of the electromagnetic sensor and the target.

Example 17: The system of any one of the preceding examples, wherein the variation in elevation of the road surface is in a longitudinal direction with respect to the position and the orientation of the electromagnetic sensor and the target.

Example 18: The system of any one of the preceding examples, wherein the processor is configured to estimate reflection points along the geometric profile of the road model using the optimization algorithm by at least: defining a rectangular search region based on the position and the orientation of the electromagnetic sensor and the target; calculating a cost function for the search region; finding all local minimals of the cost function and a global minimal of the cost function; determining, based on a comparison of the global minimal to a threshold value, a valid reflection point corresponding to the global minimal or corresponding to each local minimal; and recording the coordinates and the normal vectors of each valid reflection point.

Example 19: The system of any one of the preceding examples, wherein the processor is configured to determine, based on a comparison of the global minimal to a threshold value, a valid reflection point corresponding to the global minimal or corresponding to each local minimal by at least: determining, based on the global minimal being greater than the threshold value, that a single valid reflection point corresponds to the global minimal; or determining, based on the global minimal being less than or equal to the threshold value, that a valid reflection point corresponds to each local minimal.

Example 20: A computer-readable media comprising instructions that, when executed, cause a processor to: receive a position and an orientation of an electromagnetic sensor and a target; receive a geometric profile of a road surface; estimate reflection points of electromagnetic rays along the geometric profile of the road surface using an optimization algorithm; translate the position and orientation of the electromagnetic sensor and the target to a local coordinate system of each estimated reflection point; compute electromagnetic responses, based on the positions of the electromagnetic sensor and the target in the respective local coordinate system of each estimated reflection point; collect simulated rays corresponding to the electromagnetic responses; and output the simulated rays to an electromagnetic sensor simulator for simulating an electromagnetic sensor system.

CONCLUSION

While various embodiments of the disclosure are described in the foregoing description and shown in the drawings, it is to be understood that this disclosure is not limited thereto but may be variously embodied to practice within the scope of the following claims. From the foregoing description, it will be apparent that various changes may be made without departing from the spirit and scope of the disclosure as defined by the following claims. Problems associated with closely matching simulated electromagnetic responses to real-world measurements can occur in other systems. Therefore, although described as a way to incorporate elevation variances of a road into an electromagnetic response simulator, the techniques of the foregoing description can be applied to other systems that would benefit from including uneven surfaces into simulated electromagnetic response generation. Further, these techniques may also be applied to any system where electromagnetic response simulation is desired.

The use of "or" and grammatically related terms indicates non-exclusive alternatives without limitation unless the context clearly dictates otherwise. As used herein, a phrase referring to "at least one of' a list of items refers to any combination of those items, including single members. As an example, "at least one of: a, b, or c" is intended to cover a, b, c, a-b, a-c, b-c, and a-b-c, as well as any combination with multiples of the same element (e.g., a-a, a-a-a, a-a-b, a-a-c, a-b-b, a-c-c, b-b, b-b-b, b-b-c, c-c, and c-c-c or any other ordering of a, b, and c).

**Claims**

1. A method comprising:

   receiving, by an electromagnetic response simulator, a position and an orientation of an electromagnetic sensor and a target;
   receiving, by the electromagnetic response simulator, a geometric profile of a road surface;
   estimating, by the electromagnetic response simulator, reflection points of electromagnetic rays along the geometric profile of the road surface using an optimization algorithm;
   translating, by the electromagnetic response simulator, the position and orientation of the electromagnetic sensor and the target to a local coordinate system of each estimated reflection point;
   computing, by the electromagnetic response simulator, electromagnetic responses, based on the positions of the electromagnetic sensor and the target in a respective local coordinate system of each estimated reflection point;
   collecting, by the electromagnetic response simulator, simulated rays corresponding to the electromagnetic responses; and
   outputting, by the electromagnetic response simulator, the simulated rays to an electromagnetic sensor simulator for simulating an electromagnetic sensor system.

2. The method of claim 1, wherein the geometric profile of the road surface includes a variation in elevation of the road surface.

3. The method of claim 2, wherein the variation in elevation of the road surface is in a lateral direction with respect to the position and the orientation of the electromagnetic sensor and the target.

4. The method of claim 2, wherein the variation in elevation of the road surface is in a longitudinal direction with respect to the position and the orientation of the electromagnetic sensor and the target.

5. The method of any one of the preceding claims, wherein the geometric profile of the road surface is based on sensor measurements of a road surface used to validate an accuracy of the simulated rays.

6. The method of claim 5, wherein the sensor measurements comprise:

   measurements based on a global navigation satellite system sensor; or
   measurements based on an inertial measurement unit sensor.

7. The method of any one of the preceding claims, wherein estimating reflection points along the geometric profile of the road model using the optimization algorithm comprises:

   defining a rectangular search region based on the position and the orientation of the electromagnetic sensor and the target;
   calculating a cost function for the search region;
   finding all local minimals of the cost function and a global minimal of the cost function;
   determining, based on a comparison of the global minimal to a threshold value, a valid reflection point corresponding to the global minimal or corresponding to each local minimal; and
   recording the coordinates and the normal vectors of each valid reflection point.

8. The method of claim 7, wherein determining, based on a comparison of the global minimal to a threshold value, a valid reflection point corresponding to the global minimal or corresponding to each local minimal comprises:

   determining, based on the global minimal being greater than the threshold value, that a single valid reflection point corresponds to the global minimal; or

determining, based on the global minimal being less than or equal to the threshold value, that a valid reflection point corresponds to each local minimal.

9. The method of any one of the preceding claims, wherein estimating reflection points along the geometric profile of the road model using the optimization algorithm is performed once for a respective target.

10. The method of any one of the preceding claims, wherein computing electromagnetic responses comprises:
using a shooting and bouncing rays method to compute the electromagnetic responses.

11. The method of claim 10, wherein the shooting and bouncing rays method is further based on image theory.

12. The method of any one of the preceding claims, wherein collecting the simulated rays corresponding to the electromagnetic responses further comprises:
removing duplicate simulated rays.

13. The method of any one of the preceding claims, wherein:

the electromagnetic sensor simulator comprises a radar simulator; and
the electromagnetic sensor system comprises a radar system.

14. A system comprising at least one processor configured to perform any of the methods of claims 1 to 13.

15. A computer-readable media comprising instructions that, when executed, cause a processor to perform any of the methods of claims 1 to 13.

*FIG. 1-1*

100-2

**132**

**134**

**126**

130

z

y

x

**Radar Simulator**
**126**

Processor(s)
**136**

Computer-Readable
Storage Media
**138**

Interface
**140**

Radar Hardware Simulator
**142**

Radar Software Simulator
**144**

**Electromagnetic Simulator**
**146**

Processor(s)
**148**

Computer-Readable
Storage Media
**150**

Electromagnetic Response
Module
**152**

*FIG. 1-2*

*FIG. 2*

*FIG. 3*

400

```
┌─────────────────────────────┐
│ Define rectangle search xy region │
│ based on radar-target orientation φ │
│            402              │
└─────────────────────────────┘
              │
              ▼
┌─────────────────────────────┐
│  Calculate cost function map F of │
│      whole search region     │
│            404              │
└─────────────────────────────┘
              │
              ▼
┌─────────────────────────────┐
│  Find all the local minimals and the │
│        global minimal        │
│            406              │
└─────────────────────────────┘
              │
              ▼
         ◇ If global minimal ◇     no
          F > threshold    ────────►  ◇ For each ◇
              408                      local minimal,
              │ yes                    F ≤ threshold
              │                            410
              ▼                              │ yes
┌─────────────────────────────┐◄────────────┘
│ Record reflection point coordinate │
│ and corresponding normal vector │
│            412              │
└─────────────────────────────┘
              │
              ▼
┌─────────────────────────────┐
│ Do coordinate transformation for │
│    radar and target positions  │
│            414              │
└─────────────────────────────┘
```

## FIG. 4-1

*FIG. 4-2*

*FIG. 4-3*

EP 4 474 863 A1

500

Receive a position and an orientation of
an electromagnetic sensor and a target
502

Receive a geometric profile of a road surface
504

Estimate reflection points of electromagnetic rays
along the geometric profile of the road surface
506

Translate the position and orientation of the sensor and the target
to a local coordinate system of each estimated reflection point
508

Compute electromagnetic responses based on the positions
of the sensor and target in each local coordinate system
510

Collect simulated rays corresponding
to the electromagnetic responses
512

Output the simulated rays to an electromagnetic sensor simulator
514

*FIG. 5*

Europäisches
Patentamt

European
Patent Office

Office européen
des brevets

# EUROPEAN SEARCH REPORT

Application Number

EP 23 19 1245

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/102079 A1 (CAI XIUZHANG [US] ET AL) 30 March 2023 (2023-03-30) * the whole document * | 1-15 | INV. G01S13/00 G06F30/20 G06F30/15 |
| X | LARS REICHARDT ET AL: "Virtual Drive: A Complete V2X Communication and Radar System Simulator for Optimization of Multiple Antenna Systems", PROCEEDINGS OF THE IEEE, IEEE. NEW YORK, US, vol. 99, no. 7, 1 July 2011 (2011-07-01), pages 1295-1310, XP011367582, ISSN: 0018-9219, DOI: 10.1109/JPROC.2011.2124430 * the whole document * | 1-15 | G06F30/30 ADD. G01S13/931 G01S13/46 |
| Y | US 2011/221628 A1 (KAMO HIROYUKI [JP] ET AL) 15 September 2011 (2011-09-15) * paragraphs [0137], [0138], [0162] - [0164], [0232] - [0241], [0450] - [0457]; figures 5,6,30-32 * | 1-15 | |
| Y | Weinmann F.: "Ray tracing with PO/PTD for RCS modeling of large complex objects", IEEE transactions on antennas and propagation, 1 June 2006 (2006-06-01), pages 1797-1806, XP093107200, New York, NY DOI: 10.1109/TAP.2006.875910 Retrieved from the Internet: URL:https://ieeexplore.ieee.org/stampPDF/g etPDF.jsp?tp=&arnumber=1638375&ref= [retrieved on 2023-11-29] * the whole document * | 1-15 | TECHNICAL FIELDS SEARCHED (IPC) G01S G06F |

The present search report has been drawn up for all claims

| Place of search | Date of completion of the search | Examiner |
|---|---|---|
| Munich | 30 November 2023 | Schmelz, Christian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 19 1245

This annex lists the patent family members relating to the patent documents cited in the above-mentioned European search report.
The members are as contained in the European Patent Office EDP file on
The European Patent Office is in no way liable for these particulars which are merely given for the purpose of information.

30-11-2023

| Patent document cited in search report | | Publication date | Patent family member(s) | | Publication date |
|---|---|---|---|---|---|
| US 2023102079 | A1 | 30-03-2023 | NONE | | |
| US 2011221628 | A1 | 15-09-2011 | CN | 102221698 A | 19-10-2011 |
| | | | US | 2011221628 A1 | 15-09-2011 |

EPO FORM P0459

For more details about this annex : see Official Journal of the European Patent Office, No. 12/82